Europäisches Patentamt

European Patent Office

Office européen des brevets

(19)

(11) Veröffentlichungsnummer: **0 037 021**
**B1**

(12) # EUROPÄISCHE PATENTSCHRIFT

(45) Veröffentlichungstag der Patentschrift:
06.06.84

(51) Int. Cl.³: **A 61 C 1/14**

(21) Anmeldenummer: 81102070.0

(22) Anmeldetag: 19.03.81

(54) Haltevorrichtung für ein rotierendes zahnärztliches Werkzeug.

(30) Priorität: 28.03.80 DE 3012152
28.10.80 DE 3040537

(43) Veröffentlichungstag der Anmeldung:
07.10.81 Patentblatt 81/40

(45) Bekanntmachung des Hinweises auf die Patenterteilung:
06.06.84 Patentblatt 84/23

(84) Benannte Vertragsstaaten:
AT CH FR GB IT LI SE

(56) Entgegenhaltungen:
CH - A - 251 770
DE - A - 2 905 484
DE - B - 1 084 869
DE - B - 1 268 311
FR - A - 891 672
US - A - 2 894 325
US - A - 2 895 738

(73) Patentinhaber: SIEMENS AKTIENGESELLSCHAFT,
Berlin und München Wittelsbacherplatz 2,
D-8000 München 2 (DE)

(72) Erfinder: Wohlgemuth, Jürgen, Dipl.-Ing.,
Br.-Knauss-Strasse 61, D-6100 Darmstadt (DE)
Erfinder: Schuss, Werner, In der Lahrbach 18,
D-6148 Heppenheim (DE)
Erfinder: Hain, Johann, Lessingstrasse 6,
D-6941 Laudenbach (DE)

BUNDESDRUCKEREI BERLIN

## Beschreibung

Die Erfindung bezieht sich auf eine in einem Kopfgehäuse eines zahnärztlichen Handstückes angeordnete Haltevorrichtung für ein rotierendes Werkzeug, welches von einer hohlzylindrischen Welle aufgenommen wird und ein abgeflachtes, zur Drehmomentübertragung mit einem mit der Hohlwelle mitlaufenden Mitnehmer in Eingriff bringbares und mit einer Ringnut versehenes Schaftende aufweist, und welches mit Hilfe von Rastmitteln, die aus wenigstens einem sich im wesentlichen achsparallel zum Schaftende hin erstreckenden, mit der Welle mitlaufenden und mit einer quer zur Werkzeugachse gerichteten, in die Ringnut des Schaftes eingreifenden Rastnase versehenen Halteglied gebildet sind, durch Federkraft oder durch Eigenfederung der Rastmittel in einer Schließstellung gehalten wird, wobei die Rastnase bei einem Einschieben des Werkzeuges in die Welle mit der Ringnut in Eingriff und zur axialen Entnahme des Werkzeuges mit Hilfe einer mit einer Rückstellkraft belasteten, daumenbetätigbaren Handhabe und einem Ausrückglied außer Eingriff kommt, indem der obere, die Rastnase tragende Teil des Haltegliedes am oberen, dem Werkzeugaustritt abgewandten Ende des Kopfgehäuses in einem Freiraum der Welle ausweicht.

Bei einer bekannten Haltevorrichtung (GB-A-1 127 453) für diese Art von Werkzeugen ist zur Arretierung des Werkzeuges gegen axiales Entgleiten aus der Welle an dem dem Werkzeug abgewandten Ende des Kopfgehäuses ein längliches Halteplättchen beweglich gehaltert, das in der Schließstellung in die Nut des Werkzeuges eingreift und mit einem mit dem Daumen betätigbaren federbelasteten Schieber verbunden ist. Zur axialen Entnahme des Werkzeuges ist der Schieber in Handstücklängsrichtung zu betätigen, wodurch das Halteplättchen aus der Schließstellung in eine Freigabestellung verstellt wird. Der Schieber ist bei dieser Konstruktion auch beim Einführen des Werkzeuges in die Hohlwelle zu betätigen.

Die Anordnung eines solchen längs des Handstückes verstellbaren Schiebers mit dem Halteplättchen stellt eine relativ aufwendige Konstruktion dar, die darüber hinaus zu einer Vergrößerung des Kopfgehäuses und des sich daran anschließenden Halsteils des Handstückes führt. Außerdem besteht zwischen dem rotierenden Werkzeug und dem demgegenüber feststehenden Schieber ständig Reibung, wodurch ein erhöhter Verschleiß der Teile vorhanden ist.

Bei einer anderen bekannten Konstruktion (DE-A-2 822 708) sind zur Arretierung des Werkzeuges in der Schließstellung radial belastete Klemmkörper in Form von Wälzkörpern mit konkav gewölbter Mantelfläche vorgesehen, die mit Kanten der Ringnut des Werkzeugschaftes über einen Teil des Umfanges zur Anlage kommen und die konstant federbelastet oder durch Eigenfederung in der Schließstellung gehalten werden.

Der Platzbedarf für die Wälzlager vergrößert bei dieser Konstruktion ebenfalls das Kopfgehäuse, insbesondere in dessen Achsrichtung. Geht man aufgrund der Arbeitserfordernisse davon aus, daß das Kopfgehäuse möglichst kurz und im Durchmesser klein sein soll, so würde sich bei dieser bekannten Anordnung eine im Vergleich dazu relativ kleine Lagerlänge mit dem Nachteil einer weniger guten Lagerführung für das relativ schnell laufende Werkzeug ergeben. Die zum Öffnen der Spannvorrichtung benötigte Kraft ist hier außerdem relativ groß, da die volle, zum Halten des Werkzeuges erforderliche Klemmkraft auch zur axialen Entnahme des Werkzeuges überwunden werden muß. Eine Entnahme des Werkzeuges ist also nur durch einen kräftigen Zug am Werkzeug von Hand oder durch Ausstoßen von der Oberseite des Kopfgehäuses aus mit Hilfe einer gesonderten Hilfsvorrichtung (Bohrerausstoßvorrichtung) möglich. Die zum Ausstoß des Werkzeuges aufzubringende Kraft ist auch zum Einrasten des Werkzeuges aufzuwenden.

Diesbezügliche Nachteile bestehen auch bei einer weiteren bekannten Konstruktion (US-A-4 014 099), bei der die das Werkzeug aufnehmende Welle am oberen, dem Werkzeugaustritt abgewandten Ende eine in die Ringnut eingreifende Rastnase aufweist, wodurch ein axiales Entgleiten des Werkzeuges verhindert wird. Zur Drehmomentübertragung ist ein weiterer Vorsprung vorgesehen. Dieser Vorsprung kommt aber nicht bereits beim Einschieben des Werkzeuges, sondern erst bei Verdrehung des Werkzeuges gegenüber der Aufnahmewelle mit entsprechenden Flächen des Werkzeuges in Eingriff. Zur Entnahme des Werkzeuges muß dieses zunächst gegen die Welle verdreht und dann mit einer bestimmten, der Haltekraft entsprechenden Axialkraft nach außen gezogen werden, wobei zum Verdrehen von Werkzeug und Spannhülse die Welle festzuhalten ist.

Aus der FR-A-891 672 ist eine Haltevorrichtung der eingangs genannten Art bekannt, bei der zwei achsparallel sich erstreckende und mit nach innen gerichteten Rastnasen versehene Halteglieder bei druckknopfartiger Betätigung einer am Kopfgehäuse angeordneten Handhabe mittels eines an der Handhabe befindlichen Ausrückgliedes in einen Freiraum ausrücken können. Dieser Freiraum wird einerseits durch die Rotorwelle und andererseits durch eine zylindrische Lagerhülse gebildet, die an ihrem oberen, stirnseitigen Ende nach innen gerichtete Randteile aufweist, welche einen Anschlag für die federbelastete Handhabe bilden. Die Halteglieder sind hier zwischen Rotorwelle und Lagerhülse eingespannt. Damit die Rastnasen in die Ringnut des von der Rotorwelle aufgenommenen Werkzeuges eingreifen können, ist die Rotorwelle mit entsprechenden Durchbrechungen bzw. Ausnehmungen versehen. Die Konstruktion ist unter diesen Aspekten relativ aufwendig. Außerdem bereitet Montage und Demontage der federnden Halteglieder bei dieser Konstruktion besondere Schwierigkeiten, einerseits weil die Lagerhülse mit der druckknopfartigen Handhabe nur gemeinsam und dann nur unter Auftrennung des als Gleitlager ausgebildeten Lagers für die Rotorwelle aus dem Kopfgehäuse entnehmbar sind, andererseits weil die Rastnasen der Halteglieder genau auf die Ausnehmungen der Rotorwelle, durch die sie hindurchgreifen, ausgerichtet werden müssen. Ein weiterer Nachteil ist darin zu sehen, daß die mit der Ringnut des Werkzeuges in Eingriff bringbaren Rastnasen und der zur Entriegelung dieser Rastnasen dienende Druckknopf mit der Rotorwelle umlaufen. Nachdem der Druckknopf und ein Teil der ihn aufnehmenden Lagerbuchse den äußeren Abschluß des Kopfgehäuses bilden, laufen diese Teile ungeschützt mit hoher Drehzahl um. Für den Benutzer des Handstückes stellt dies somit eine Gefahrenquelle dar. Durch die mitumlaufenden Teile besteht infolge der ständigen Reibung auch ein erhöhter Verschleiß der Teile.

Aufgabe der vorliegenden Erfindung ist es, sowohl von der Werkzeughalterung als auch von der Bedienung her gesehen eine gegenüber dem Stand der Technik verbesserte und vereinfachte Haltevorrichtung anzugeben, insbesondere mit dem Ziel, ein Mitumlaufen der druckknopfartig betätigbaren Handhabe zu vermeiden und Montage und Demontage der dem Verschleiß unterworfenen Halteteile zu vereinfachen. Die zur Lösung dieser Aufgabe anzugebenden Mittel sollen dazu beitragen, daß das Kopfgehäuse möglichst gedrungen und auch bei Verwendung von Kugellagern im Durchmesser klein gehalten, dennoch aber eine möglichst große Lagerlänge bzw. ein möglichst großer Lagerabstand vorgesehen werden kann.

Die gestellte Aufgabe wird gemäß der Erfindung dadurch gelöst, daß die Welle eine den Freiraum bildende, im Durchmesser abgestufte innere Ausnehmung zur Aufnahme der Rastmittel enthält, die so gestaltet ist, daß in deren weiterem Abschnitt die Rastnase zur Freigabe der Eingriffsverbindung im wesentlichen senkrecht zur Werkzeugachse nach außen ausweichen kann, daß die Rastmittel mit ihrem freien Ende dem einerseits an der Handhabe angeordneten oder mit diesem in Wirkverbindung stehenden und andererseits im Kopfgehäuse abgestützten und so mit der Welle nicht mitlaufenden Ausrückglied bei nicht betätigter Handhabe kontaktfrei gegenüberstehen und bei betätigter Handhabe von dem Ausrückglied entgegen der Federwirkung bzw. der Eingriffsrichtung im Sinne einer Freigabe nach außen gedrückt werden, und daß die Handhabe im Kopfgehäuse so abgestützt ist, daß sie bei Betätigung eine Axial- und/oder Kippbewegung ausführen kann.

Wesentliche Vorzüge der erfindungsgemäßen Konstruktion sind, daß die Haltevorrichtung relativ einfach zu fertigen und zu montieren bzw. demontieren ist und daß die Halteglieder relativ wenig Platz benötigen, insbesondere im Durchmesser, so daß das Kopfgehäuse besonders bei Verwendung von Kugellagern zur Lagerung der das Werkzeug aufnehmenden Welle relativ klein gehalten und die Lagerlänge für die Welle optimal dimensioniert werden kann. Nachdem die Handhabe nicht Bestandteil des sich drehenden Systems ist, sind auch weniger Verschleißteile vorhanden. Eine Vereinfachung in der Montage ergibt sich dadurch, daß die Halteteile nach Abnahme der Handhabe ohne Demontage der Rotorlagerung axial in die Rotorwelle eingeschoben werden können. Die Rastnasen greifen direkt in die Ringnut ein. Besondere Vorteile sind auch in der Bedienung zu sehen. Zum Werkzeugwechsel genügt ein kurzes Andrücken auf die daumenbetätigbare Handhabe ohne größere Kraftanstrengung, wobei die Betätigungsart dem Benutzer weitgehend freigestellt ist; er kann die Handhabe sowohl durch axiales und/oder auch durch seitliches Drücken betätigen. Besonders bedienungsfreundlich ist es, wenn in vorteilhafter, auch für sich bedeutsamer Ausgestaltung der Erfindung, die daumenbetätigbare Handhabe als mit ihrem Rand im Kopfgehäuse starr befestigter Druckdeckel ausgebildet ist, der einen form- bzw. federelastischen Flächenabschnitt enthält, welcher in seiner Ausgangslage kuppenförmig nach außen gewölbt ist und bei Druck auf den Deckel derart verformt wird, daß diese konvexe Wölbung aufgrund der federnden Eigenschaft des verwendeten Materials in eine konkave Wölbung unter Bildung einer das selbsttätige Zurückführen des Druckdeckelabschnittes in seine Ausgangslage bewirkenden Rückstellkraft übergeht, wobei durch den durch die Verformung entstehenden Hub über das Ausrückteil die Halte- oder Spannvorrichtung aus einer das Werkzeug festhaltenden Verriegelungsstellung in eine das Werkzeug freigebende Entriegelungsstellung gebracht wird.

Die Formgebung und das Material für den Druckdeckel sind vorteilhafterweise so gewählt, daß der Deckel als Sprungdeckel wirkt, dergestalt, daß der Druckdeckelabschnitt bei Erreichen eines Druckpunktes in die konkave Wölbung springt und bei Druckentlastung selbsttätig wieder in die konvexe Wölbung zurückspringt.

In der nachfolgenden Beschreibung werden mehrere Ausführungsbeispiele der Erfindung näher erläutert. Es zeigt

Fig. 1 einen Teil eines zahnärztlichen Handstückes mit der erfindungsgemäßen Vorrichtung im Längsschnitt,

Fig. 2 ein in die Haltevorrichtung nach Fig. 1 einsetzbares Werkzeug in schaubildlicher Darstellung,

Fig. 3, 4 den in Fig. 1 gezeigten Teil des Handstückes, jedoch mit unterschiedlich aufgebauter, daumenbetätigbarer Handhabe,

Fig. 5 die daumenbetätigbare Handhabe nach Fig. 3 in schaubildlicher Darstellung als Fertigteil,

Fig. 6 Einzelteile der Handhabe nach Fig. 5,

Fig. 7 ein anderes Kopfgehäuse eines Handstückes im Längsschnitt mit einer anderen Ausführungsform der daumenbetätigbaren Handhabe,

Fig. 8 eine gegenüber Fig. 7 um 90° versetzte Schnittdarstellung im Bereich der Halterung des Werkzeuges,

Fig. 9 die Haltemittel für das Werkzeug in schaubildlicher Darstellung,

Fig. 10 eine andere Ausführungsform der Haltemittel,

Fig. 11 die in Fig. 7 dargestellten Andrückmittel für die daumenbetätigbare Handhabe in der Draufsicht,

Fig. 12 eine weitere Ausführungsform der Lagerung der daumenbetätigbaren Handhabe im Schnitt.

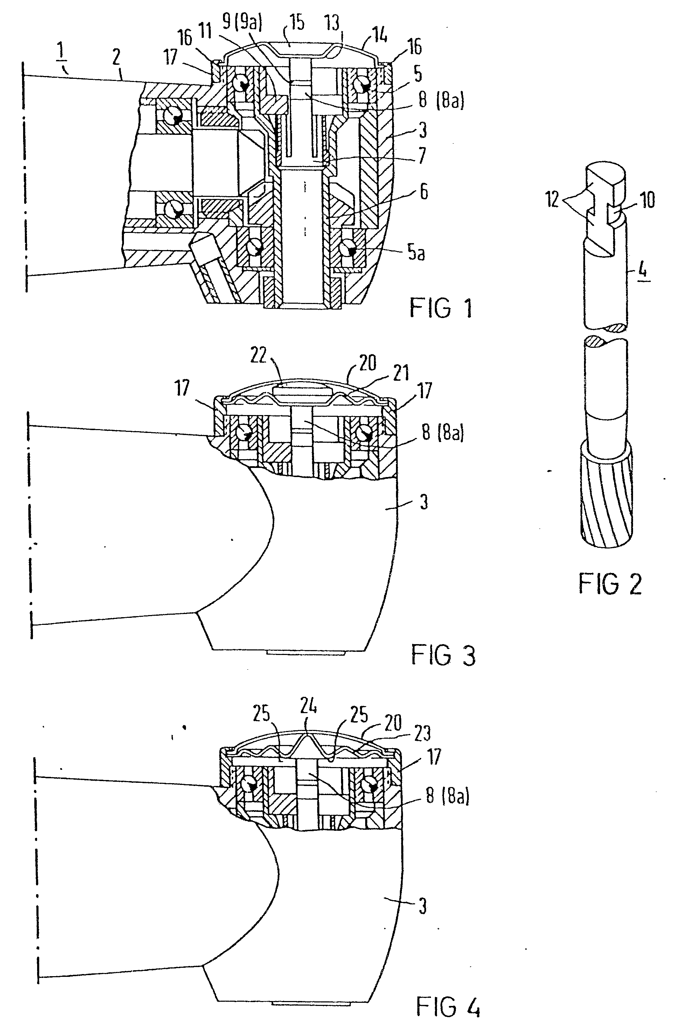

Die Fig. 1 zeigt im Längsschnitt den vorderen Teil eines mit 1 allgemein bezeichneten zahnärztlichen Handstückes, an dessen Halsteil 2 sich ein Kopfgehäuse 3 anschließt, in dem ein in Fig. 2 schaubildlich dargestelltes Werkzeug 4 (Bohrer, Fräser od. dgl.) drehbar gehaltert werden kann.

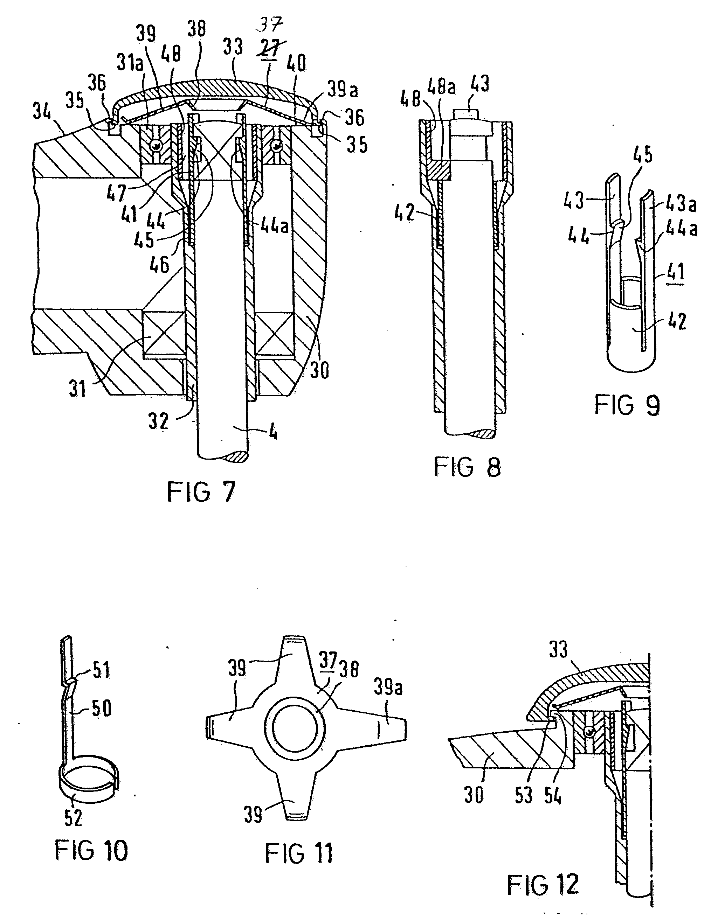

In dem Kopfgehäuse 3 ist mittels zweier Lager 5, 5a eine hohlzylindrische Welle 6 zur Aufnahme des in Fig. 2 gezeigten Werkzeuges drehbar gelagert. In die Hohlwelle 6 eingepreßt ist eine mehrfach geschlitzte Hülse 7 mit achsparallel sich erstreckenden federnden Zungen 8, 8a, an denen nach innen gerichtete Rastnasen 9 (9a) angeordnet sind, die nach Einschieben des Werkzeuges 4 in die Hohlwelle 6 in die Ringnut 10 (Fig. 2) des Werkzeuges 4 eingreifen. Mit 11 ist ein Mitnehmer bezeichnet, der mit einer Abflachung 12 des Werkzeuges 4 (Fig. 2) korrespondiert und so das Drehmoment von der Hohlwelle 6 auf das Werkzeug 4 übertragen kann. Einzelheiten über den Aufbau der Hohlwelle bzw. der Halteglieder sind aus den Fig. 7 bis 12 ersichtlich.

Die beiden federnden Zungen 8, 8a, von denen in der Darstellung nur eine erkennbar ist, erstrecken sich im wesentlichen achsparallel bis zum oberen, dem Werkzeugaustritt abgewandten Ende des Kopfgehäuses 3 und stehen dort kontaktfrei einem mit 13 bezeichneten Ausrückglied gegenüber. Das Ausrückglied 13 ist Bestandteil eines die Oberseite des Kopfgehäuses 3 abschließenden Druckdeckels 14, der als daumenbetätigbare Handhabe zum Lösen der Haltevorrichtung für das Werkzeug ausgebildet ist und zu diesem Zweck eine zentrische Einbuchtung 15 enthält.

Der Druckdeckel 14 ist, wie aus der Darstellung hervorgeht, in seiner Ausgangsstellung kuppenförmig nach außen gewölbt; seine Randteile 16 sind in einem Haltering 17 vorzugsweise durch Bördelung eingespannt. Der Haltering 17 wiederum ist auf dem Kopfgehäuse 3 aufgeschraubt. Der Druckdeckel kann so beispielsweise zum Auswechseln der Hülse 7 mit den federnden Zungen 8, 8a leicht abgenommen werden.

Die Fig. 3 zeigt eine andere Ausführungsform für die daumenbetätigbare Handhabe; hier sind in dem Haltering 17 einerseits ein gleichmäßig nach außen hin kuppenförmig gewölbter Druckdeckel 20 und andererseits eine Wellfeder 21 eingespannt. Zwischen Wellfeder 21 und Druckdeckel 20 ist im Zentrum ein Verbindungsteil 22 eingelegt, welches bei Andruck auf den Deckel 20 die Hubbewegung auf die Wellfeder 21 überträgt. Das Verbindungsteil 22 liegt am Druckdeckel 20 praktisch punktförmig und an der Wellfeder 21 formschlüssig an. Das mit den federnden Zungen 8, 8a korrespondierende Ende ist dabei konisch ausgebildet, so daß bei einem Niederdrücken des Deckels die Zungen 8, 8a nach außen aufgespreizt werden, wodurch die Rastnasen 9, 9a außer Eingriff mit der Ringnut 10 des Werkzeuges 4 kommen.

Die Fig. 4 zeigt eine weitere Ausführungsform der daumenbetätigbaren Handhabe. Hier ist eine etwas anders ausgebildete Wellfeder 23 vorgesehen. Diese ist so gestaltet, daß sie im Bereich des Zentrums an der mit 24 bezeichneten Stelle punktförmig am Druckdeckel 20 anliegt. Die Wellfeder 23 ist so geformt, daß sie im Bereich ihres Zentrums selbst ein Andrückteil 25 bildet, welches wiederum dazu dient, daß die federnden Zungen 8, 8a bei Druck auf den Deckel 20 auseinandergespreizt werden.

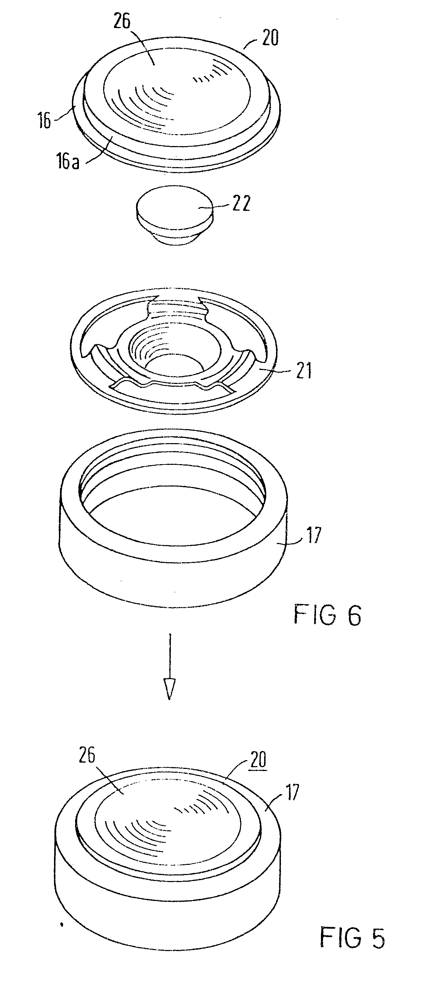

Die Fig. 5 zeigt in einer schaubildlichen Darstellung die in Fig. 3 dargestellte daumenbetätigbare Handhabe als Fertigteil und Fig. 6 die Einzelteile davon.

Schließlich wird noch auf eine weitere vorteilhafte Ausführungsform hingewiesen, bei der in Betrachtung der Fig. 3 anstelle der Wellfeder 21 ein entsprechend dem Druckdeckel 14 in Fig. 1 geformter federelastischer Einsatz (ebenfalls unter Zwischenlage des Teils 22) vorgesehen ist, bei dem der nach innen gezogene Teil 15 mit der Fläche 13 wiederum als Andrückteil wirkt.

Bei allen Ausführungsformen ist der Druckdeckel 14 bzw. 20 als Sprungdeckel ausgebildet, d. h. die gewölbte Deckelfläche bzw. ein Teil dieser Fläche (siehe kreisförmigen Flächenabschnitt mit der Pos. 26 in Sig. 5 und 6) weist ein federelastisches Verhalten auf, hingegen der Rand (16, 16a) jeweils am Kopfgehäuse 3 direkt oder an dem mit dem Kopfgehäuse verbundenen Haltering 17 starr befestigt (eingespannt, eingeklebt, eingeschweißt od. dgl.) ist. Dieses aufgrund der Formgebung und des verwendeten Materials (kaltverformter Federstahl von etwa 0,05 mm Dicke) erhaltene form- bzw. federelastische Verhalten, welches in dem in den Fig. 5 und 6 mit 26 bezeichneten kreisförmigen Flächenabschnitt gegeben ist, ermöglicht bei entsprechender Wölbung bzw. Wahl des verwendeten Federmaterials, daß der Deckel bei Betätigung aus der dargestellten Ausgangsstellung mit konvexer Wölbung nach Erreichen eines Druckpunktes in eine Position mit konkaver Wölbung überspringt und bei Druckentlastung aus der konkaven (negativen) Form wieder zurück in die (positive) konvexe Wölbung geführt wird. Bei diesem Vorgang entsteht bei Überschreiten des Druckpunktes, wozu ein definierter Widerstand zu überwinden ist, ein charakteristisches Geräusch. Der beim Drücken auf den Deckel erzeugte Hub wird über das Kupplungsstück (z. B. Pos. 22) an die Halteglieder 8, 8a weitergegeben, die aufgrund der kegeligen Form des Kupplungsstückes auseinandergespreizt werden und so die beiden mit der Ringnut 10 des Werkzeuges 4 in Eingriff befindlichen Halteglieder außer Eingriff bringen. Bei Druckentlastung des Deckels springt dieser dann wieder in seine Ausgangslage zurück. Das Kupplungsstück wird durch den Druck der Wellfeder (21, 23) ebenfalls wieder in seine Ausgangslage zurückgebracht.

Die Fig. 7 bis 12 lassen den näheren Aufbau der das Werkzeug 4 spannenden Haltemittel erkennen, wobei als Betätigungsglied für die Halte- bzw. Spannvorrichtung ebenfalls eine daumenbetätigbare Handhabe vorgesehen ist. Diese ist aber, im Gegensatz zu den zuvor beschriebenen Ausführungsformen, nicht als Sprungdeckel ausgebildet.

In einem Kopfgehäuse 30 ist mittels zweier (Kugel-)Lagerpaare 31, 31a eine hohlzylindrische Welle 32 zur Aufnahme des Werkzeuges 4 drehbar gelagert. Die Oberseite des Kopfgehäuses 30 ist durch einen symmetrischen Deckel 33 abgedeckt, dessen Oberfläche praktisch ohne größeren Absatz in den oberen Teil des Halsteils 34 des Handstückes übergeht. Der Deckel 33 greift mit einem kleinen Bund 35 unter einen Vorsprung 36 des Kopfgehäuses 30 ein und wird mittels einer sternförmig gestalteten, als Ausrückglied dienenden Feder 37 gegen diesen Vorsprung auf Anschlag gedrückt. Das so gebildete Widerlager erlaubt ein sowohl axiales als auch seitliches Betätigen der Handhabe 33, insbesondere ein Kippen bzw. kombiniertes Schieben und Drücken.

Das federnde Teil 37 ist, wie die Draufsicht in Fig. 10 zeigt, etwa sternförmig ausgebildet und enthält einerseits eine zentrische Anformung 38 sowie vier sternförmig angeordnete Abstützarme 39, von denen der mit 39a bezeichnete eine etwas länger ausgebildet ist. Die Abstützarme 39 liegen auf der oberen Stirnfläche 40 des Kopfgehäuses 30 auf, wobei der etwas längere Abstützarm 39a unter den Deckel 33 greift, wie aus der Schnittdarstellung in Fig. 7 ersichtlich ist. Damit ist eine Fixierung des federnden Teils 37 insbesondere gegen Verdrehen gegeben. Die zentrisch angeordnete Anformung 38 des Ausrückgliedes 37 steht bei nicht gedrückter Handhabe 33 kontaktfrei gegenüber den freien Enden von in der Hohlwelle 32 eingelegten Rastmitteln 41. Der Aufbau der Rastmittel 41 ist aus Fig. 9 ersichtlich. Sie bestehen im wesentlichen aus einem hülsenförmigen, mehrfach geschlitzten Basisteil 42 mit zwei sich daran anschließenden, diametral einander gegenüberliegenden federnden Zungen 43, 43a. Die Zungen 43, 43a weisen im oberen Bereich Rastnasen 44, 44a auf, welche mit einer vom Basisteil 44 aus betrachtet nach innen gerichteten Schräge 45 (Fig. 7) versehen sind. Am Ende der Schräge 45 sind die Rastnasen 44, 44a, wie aus Fig. 7 ersichtlich ist, mit der Ringnut 10 des Werkzeuges 4 angepaßten (waagerechten) Anlageflächen versehen.

Die Welle 32 ist an dem dem Werkzeugaustritt abgewandten Ende mit zwei im Durchmesser abgestuften inneren Ausdrehungen versehen; eine erste, der Wandstärke der Rastmittel 41 entsprechende Ausdrehung 46 dient zur Aufnahme des Basisteils 44 und eine zweite, im Durchmesser größere Ausdrehung 47, in der ein hülsenförmiges Mitnehmerteil 48 eingepreßt ist. Das Mitnehmerteil 48 ist, wie aus Fig. 8 ersichtlich ist, mit einem Abschnitt 48a versehen, der an der Abflachung 12 (Fig. 2) des Werkzeuges 4 anliegt und so das Drehmoment von der Welle auf das Werkzeug überträgt.

Zur Montage der Rastmittel 41 wird das in Fig. 9 dargestellte Teil bei abgenommenem Deckel 33 in die erste innere Ausnehmung 46 mit Spiel eingelegt. Danach wird die Hülse 48 in die zweite größere Ausnehmung 47 eingepreßt, wobei der Mitnehmerteil 44a zwischen die beiden Lappen 43 zu liegen kommt (vgl. Fig. 8 und 9), wodurch einerseits die Rastmittel axial gegen Herausgleiten und andererseits gegen Verdrehung gesichert sind.

Wie aus Fig. 7 ersichtlich ist, erstrecken sich die beiden federnden Lappen bzw. Zungen 43, 43a im wesentlichen achsparallel zum oberen, dem Werkzeugaustritt abgewandten Ende des Kopfgehäuses 30. Wird die daumenbetätigbare Handhabe 33 durch Andrücken betätigt, so kommt die zentrische Anformung 38 des Ausrückgliedes 37 in Kontakt mit den oberen Enden der beiden Zungen 43, 43a, wodurch diese quer zur Werkzeugachse nach außen gedrückt werden. Die Rastnasen 44, 44a kommen sodann mit der Ringnut 10 des Werkzeuges außer Eingriff. Das Werkzeug kann danach sehr leicht axial aus dem Kopfgehäuse 30 entnommen werden. Nach Rücknahme der Andrückkraft auf die Handhabe 33 wird diese durch das federnde Ausrückglied 37 wieder in ihre Grundstellung zurückgeführt, in der die Kontaktierung zwischen dem Ausrückglied und den federnden Zungen 43 wieder aufgehoben wird. Die innere Ausnehmung 47 ist so dimensioniert, daß genügend Freiraum zum Ausweichen der federnden Zungen beim Aufspreizen verbleibt.

Beim Einschieben des Werkzeuges 4 in die Welle 32 werden die Rastnasen 44, 44a der federnden Zungen 43, 43a über die Schräge 45 vom Werkzeugschaft entgegen der Eingriffsrichtung quer zur Werkzeugachse nach außen gedrückt. Das Werkzeug wird dabei gegen die Welle so weit verdreht, bis die Abflachung 12 am Werkzeugschaft mit dem fest mit der Welle 32 verbundenen Mitnehmer 48a in Eingriff kommt. Bei einem weiteren Einschieben rasten schließlich die Nasen 44, 44a in die Ringnut 10 des Werkzeuges 4 ein. In dieser Schließstellung, wie sie in Fig. 7 gezeigt ist, ist sowohl die für eine Drehmomentübertragung als auch für eine axiale Halterung erforderliche formschlüssige Verbindung hergestellt.

In Fig. 10 ist eine andere Ausführungsform eines Haltegliedes bezeichnet; anstelle der beiden federnden Zungen 43, 43a, wie sie in Fig. 9 gezeigt sind, ist hier nur ein achsparallel sich erstreckendes federndes Teil 50 mit einer entsprechend ausgebildeten Rastnase 51 vorgesehen, wobei das federnde Teil 50 von einem in die innere Ausnehmung 46 einzulegenden federnden Ring 52 getragen wird.

In Fig. 12 ist schließlich noch eine andere Art der Lagerung der daumenbetätigbaren Handhabe 33 aufgezeigt. Im Gegensatz zu der in Fig. 7 aufgezeigten Konstruktion enthält der Deckel 33 einen nach innen gerichteten Bund 53, der von einem nach außen gerichteten Vorsprung 54 des Kopfgehäuses 30 übergriffen wird.

**Patentansprüche**

1. In einem Kopfgehäuse (30) eines zahnärztlichen Handstückes angeordnete Haltevorrichtung für ein rotierendes Werkzeug (4), welches von einer hohlzylindrischen Welle (32) aufgenommen wird und ein abgeflachtes, zur Drehmomentübertragung mit einem mit der Hohlwelle mitlaufenden Mitnehmer (48) in Eingriff bringbares und mit einer Ringnut (10) versehenes Schaftende aufweist, und welches mit Hilfe von Rastmitteln (41), die aus wenigstens einem sich im wesentlichen achsparallel zum Schaftende hin erstreckenden, mit der Welle (32) mitlaufenden und mit einer quer zur Werkzeugachse gerichteten, in die Ringnut (10) des Schaftes eingreifenden Rastnase (44) versehenen Halteglied (43) gebildet sind, durch Federkraft oder durch Eigenfederung der Rastmittel (41) in einer Schließstellung gehalten wird, wobei die Rastnase (44) bei einem Einschieben des Werkzeuges (4) in die Welle (32) mit der Ringnut (10) in Eingriff und zur axialen Entnahme des Werkzeuges mit Hilfe einer mit einer Rückstellkraft belasteten, daumenbetätigbaren Handhabe (33) und einem Ausrückglied (37) außer Eingriff kommt, indem der obere, die Rastnase (44) tragende Teil des Halteglieds (43) am oberen, dem Werkzeugaustritt abgewandten Ende des Kopfgehäuses in einem Freiraum der Welle (32) ausweicht, dadurch gekennzeichnet, daß die Welle (32) eine den Freiraum bildende, im Durchmesser abgestufte innere Ausnehmung (46, 47) zur Aufnahme der Rastmittel (41) enthält, die so gestaltet ist, daß in deren weiterem Abschnitt (47) die Rastnase (44) zur Freigabe der Eingriffsverbindung im wesentlichen senkrecht zur Werkzeugachse nach außen ausweichen kann, daß die Rastmittel (41) mit ihrem freien Ende dem einerseits an der Handhabe (33) angeordneten oder mit diesem in Wirkverbindung stehenden und andererseits im Kopfgehäuse (30) abgestützten und so mit der Welle nicht mitlaufenden Ausrückglied (37) bei nicht betätigter Handhabe (33) kontaktfrei gegenüberstehen und bei betätigter Handhabe von dem Ausrückglied entgegen der Federwirkung bzw. der Eingriffsrichtung im Sinne einer Freigabe nach außen gedrückt werden, und daß die Handhabe (33) im Kopfgehäuse (30) so abgestützt ist, daß sie bei Betätigung eine Axial- und/oder Kippbewegung ausführen kann.

2. Vorrichtung nach Anspruch 1, dadurch gekennzeichnet, daß die Welle (32) eine der Wandstärke des Haltegliedes (41) entsprechende erste Ausnehmung (46) enthält, in die das dem Ausrückglied (37) abgewandte Ende (42) des Haltegliedes (43) eingelegt ist und die Welle eine darüber angeordnete zweite größere Ausnehmung (47) enthält, in der der Mitnehmer (48) angeordnet ist, dergestalt, daß er das Halteglied (43) gegen axiales Herausfallen und Verdrehen sichert.

3. Vorrichtung nach Anspruch 2, dadurch gekennzeichnet, daß sich die zweite obere Ausnehmung (47) im Bereich des oberen Lagers (31a) an dem dem Werkzeugaustritt abgewandten Ende der Welle (32) befindet, die Ausnehmungen (46, 47) Ausdrehungen sind und der Mitnehmer (48) als in die obere Ausnehmung (47) fest eingesetzte Buchse ausgebildet ist.

4. Vorrichtung nach Anspruch 3, dadurch gekennzeichnet, daß die Rastmittel (41) ein in der ersten Ausdrehung (46) einsetzbares hülsenförmiges Basisteil (42) enthalten, an dem zwei achsparallel sich daran anschließende federnde Zungen (43, 43a) mit daran befestigten, vorzugsweise angeformten Rastnasen (44, 44a) angeordnet sind.

5. Vorrichtung nach einem der Ansprüche 1 bis 4, dadurch gekennzeichnet, daß die Rastmittel aus einem offenen, in der ersten Ausnehmung (46) der Welle (32) eingelegten Ring (52) mit einem achsparallel sich erstreckenden, die Rastnase (51) enthaltenden federnden Teil (50) bestehen.

6. Vorrichtung nach einem der Ansprüche 1 bis 5, dadurch gekennzeichnet, daß die Handhabe (33) an dem dem Halsteil (34) des Handstückes gegenüberliegenden oberen Ende des Kopfgehäuses (30) gegen ein Widerlager (35, 36) anliegt.

7. Vorrichtung nach einem der Ansprüche 1 bis 6, dadurch gekennzeichnet, daß als Ausrückglied (37) ein federndes Teil mit einer zentrisch angeordneten Anformung (38) zur Kontaktierung mit dem Halteglied (43) vorgesehen ist.

8. Vorrichtung nach Anspruch 7, dadurch gekennzeichnet, daß das Ausrückglied (37) sich mittels mehrerer sternförmig ausgebildeter und angeordneter Abstützarme (39) an einer Planfläche (40) des Kopfgehäuses (30) abstützt und der eine Abstützarm (39a) unter einen Bund (35) der Handhabe (33) bzw. einen Vorsprung (36) des Kopfgehäuses (30) greift und so das Widerlager für die daumenbetätigbare Handhabe (33) bildet.

9. Vorrichtung nach einem der Ansprüche 1 bis 8, dadurch gekennzeichnet, daß die daumenbetätigbare Handhabe (33) als mit ihrem Rand (16) im Kopfgehäuse (3) starr befestigter Druckdeckel (14, 20) ausgebildet ist, der einen form- bzw. federelastischen Flächenabschnitt (26) enthält, welcher in seiner Ausgangslage kuppenförmig nach außen gewölbt ist und bei Druck auf den Deckel (14, 20) derart verformt wird, daß diese konvexe Wölbung aufgrund der federnden Eigenschaft des verwendeten Materials in eine konkave Wölbung unter Bildung einer das selbsttätige Zurückführen des Druckdeckelabschnittes (26) in seine Ausgangslage bewirkenden Rückstellkraft übergeht, wobei durch den durch die Verformung entstehenden Hub über das Ausrückteil (13, 22, 25) die Halte- oder Spannvorrichtung (7 bis 9) aus einer das Werkzeug (4) festhaltenden Verriegelungsstellung in eine das Werkzeug freigebende Entriegelungsstellung gebracht wird.

10. Vorrichtung nach Anspruch 9, dadurch gekennzeichnet, daß die Formgebung und das Material für den Druckdeckel (14, 20) so gewählt sind, daß der Deckel als Sprungdeckel wirkt, dergestalt, daß der Druckdeckelabschnitt (26) bei Erreichen eines Druckpunktes in die konkave Wölbung springt und bei Druckentlastung selbsttätig wieder in die konvexe Wölbung zurückspringt.

11. Vorrichtung nach Anspruch 9 oder 10, dadurch gekennzeichnet, daß der Druckdeckelabschnitt (26) im Bereich seines Zentrums eine Einformung (15) aufweist, deren dem Werkzeug (4) zugewandte Fläche (13) als Andrückteil dient.

12. Vorrichtung nach einem der Ansprüche 9 bis 11, dadurch gekennzeichnet, daß im Zentrum des Druckdeckels (20) ein vorzugsweise kegelig ausgebildetes, das Andrückteil bildendes Kupplungselement (22) anliegt, welches von einer mit dem Druckdeckel (20) im Kopfgehäuse (3) befestigten Wellfeder (21) formschlüssig gehalten ist.

13. Vorrichtung nach einem der Ansprüche 9 bis 12, dadurch gekennzeichnet, daß im Zentrum des Druckdeckels (20) eine mit diesem im Kopfgehäuse (3) befestigte Wellfeder (23) anliegt, und daß die Wellfeder (23) in diesem Bereich so geformt ist, daß dieser Abschnitt (25) als Andrückteil für die Halteglieder (8, 8a) wirkt.

14. Vorrichtung nach einem der Ansprüche 9 bis 13, dadurch gekennzeichnet, daß der Druckdeckel (20) eine glatte Außenwölbung aufweist, daß im Zentrum des Druckdeckels ein vorzugsweise kegelig ausgebildetes Kupplungselement (22) vorgesehen ist und daß ein in der Wirkung dem Druckdeckel entsprechender, weiterer deckelartiger Einsatz (entsprechend Pos. 14 in Fig. 1) vorgesehen ist, welcher mit einer dem Kupplungselement (22) angepaßten Einformung (entsprechend Pos. 15 in Fig. 1) versehen ist, deren der Halte- und Spannvorrichtung (7 bis 9) zugewandte Flächen (entsprechend Pos. 13 in Fig. 1) als Andrückteil wirken.

15. Vorrichtung nach einem der Ansprüche 9 bis 14, dadurch gekennzeichnet, daß der Druckdeckel (20) bzw. Druckdeckel (20) und Wellfeder (21) bzw. Druckdeckel (20) und Einsatz als Baueinheit in einem am Kopfgehäuse (3) abnehmbar gehalterten Haltering (17) befestigt ist bzw. sind.

16. Vorrichtung nach Anspruch 15, dadurch gekennzeichnet, daß der Druckdeckel (20) bzw. die Baueinheit (20, 21) im Haltering (17) mit dem Kopfgehäuse (3) verschraubt ist.

**Claims**

1. A holding device, arranged in a head housing (3) of a dental hand-piece, for a rotating tool (4) which is accommodated in a hollow, cylindrical shaft (32) and has a flattened shank end which, for transmitting torque, can be brought into engagement with a carrier (48) which rotates with the hollow shaft, and is provided with an annular groove (10), and which tool (4), rotates with the shaft (32) with the aid of locking means (41) which consist of at least one holding element (43) extending to the shank end basically parallel to the axis, and is provided with a latch (44) which is directed transversely to the tool axis and engages into the annular groove (10) of the shank, is held in a closed position by spring force or by the intrinsic resilience of the locking means (41), wherein, on insertion of the tool (4) into the shaft (32), the latch (44) engages with the annular groove (10), and, in order that the tool may be axially withdrawn, is released therefrom with the aid of a thumb-operable actuator (33) which is subject to a restoring force, and of a release member (38), the upper part of the holding element (43) which carries the latch (44), moving into a free space in the shaft (32) at the upper end of the head housing which faces away from the outlet for the tool, characterized in that the shaft (32) has an internal recess (46, 47) which forms the free space, is stepped in diameter, and serves to accommodate the latch (41), which recess is so designed that in a further portion (47) thereof, the latch (44) can move outwardly basically at right angles to the axis of the tool, in order to release the engagement connection; that, when the actuator (33) is not operated, the locking means (41) is arranged, with its free end out of contact with, but opposite the release member (37), which, on the one hand, is arranged on the actuator (33) or is operatively connected thereto, and, on the other hand, is supported in the head housing (30) and thus does not rotate with the shaft, and that, when the actuator is operated, the locking means is pressed outwardly by the release member against the spring force and the direction of engagement, so as to effect disengagement; and that the actuator (33) is supported in the head housing (30) in such a way that it is capable of executing an axial and/or tilting movement when operated.

2. A device according to claim 1, characterized in that the shaft (32) contains a first recess (46) which corresponds to the wall thickness of the holding element (41) and into which is inserted that end (42) of the holding element (41) which is remote from the pressure member (37), and the shaft contains a second larger recess (47) which is arranged above the first and contains the carrier (48), so that the carrier safeguards the holding element (41) against axial drop-out and rotation.

3. A device according to claim 2, chraracterized in that the second, upper recess (47) is arranged in the region of the upper bearing (31a) at that end of the shaft (32) which faces away from the outlet for the tool, the recesses (46, 47) are in the form of bores, and the carrier (48) is formed by a bush which is fixedly inserted into the upper recess (47).

4. A device according to claim 3, characterized in that the holding element (41) contains a socket-shaped base portion (42) which can be inserted into the first recess (46) and on which there are arranged two axially-parallel resilient tongues (43, 43a) joined thereto, and preferably formed therewith, on which latches (44, 44a) are arranged.

5. A device according to one of claim 1 to 4, characterized in that the holding element consists of an open ring (52) which is inserted in the first recess (46) of the shaft (32), and has a resilient portion (50) which extends in parallel to the axis and contains the latch (51).

6. A device according to one of claims 1 to 5, characterized in that the actuator (33) abuts at the upper end of the head housing (30), which lies opposite the neck part (34) of the hand piece, against an abutment (35, 36).

7. A device according to one of claims 1 to 6, characterized in that the pressure member (37) consists of a spring portion having a centrally arranged portion (38) formed therewith for contacting the holding element (41).

8. A device according to claim 7, characterized in that the release member (37) rests on a flat surface (40) of the head housing (30) by way of a plurality of support arms (39) which are designed and arranged in star formation; and the first support arm (39a) engages under a flange (35) of the actuator (33) and/or a projection (36) of the head housing (30), and thus forms the abutment for the thumb-operable actuator (33).

9. A device according to one of claims 1 to 8, characterized in that the thumb-operable actuator (33) comprises a pressure cover (14, 20), the edge (16) of which is rigidly secured in the head housing (3) and which contains a shape-deformably or resiliently elastic surface portion (26) which, in its initial state, curves outwards in the form of a cup and, in the event of pressure on the cover (14, 20), undergoes deformation so that as a result of the resilient properties of the material used this convex curvature is transformed into a concave curvature, so as to provide a restoring force which causes the pressure cover portion (26) automatically to return to its initial state, the travel above the release component (13, 22, 25) which occurs as a result of the deformation causing the holding or clamping device (7 to 9) to be brought out of the locking position in which the tool (4) is secured, into an unlocked position which releases the tool.

10. A device according to claim 9, characterized in that the shape and the material of the pressure cover (14, 20) are so selected that the cover acts as a spring cover, so that when a particular pressure is reached, the pressure cover portion (26) springs into the concave curvature and when the pressure is released, it automatically springs back into the convex curvature.

11. A device according to claim 9 or claim 10, characterized in that, in the region of its centre, the pressure cover portion (26) contains a recess (15), the surface (13) of which facing towards the tool (4) serves as a pressure component.

12. A device according to one of claims 9 to 11, characterized in that, in the centre of the pressure cover (20), there is arranged a, preferably conical, coupling element (22), which forms the pressure component and which is secured in shape-locking fashion by means of a corrugated spring (21) which is attached to the pressure cover (20) within the head housing (3).

13. A device according to one of claims 9 to 12, characterized in that, in the centre of the pressure cover (20), there is arranged a corrugated spring (23) which is attached to the cover within the head housing (3); and that, in this region, the corrugated spring (23) is so shaped that this portion (25) acts as the pressure component for the holding elements (8, 8a).

14. A device according to one of claims 9 to 13, characterized in that the pressure cover (20) has a smooth external curvature; that, in the centre of the pressure cover, there is arranged a, preferably conical, coupling element (22), and that a further cover-like insert (corresponding to item 14 in fig. 1) is provided which corresponds to the pressure cover as regards its operation and which has a recess (corresponding to item 15 in fig. 1) which conforms to the coupling element (22) and the surfaces (corresponding to item 13 in fig. 1) which face towards the holding- and clamping device (7 to 9) serve as pressure component.

15. A device according to one of claims 9 to 14, characterized in that the pressure cover (20), or the pressure cover (20) and the corrugated spring (21), or the pressure cover (20) and insert, as the case may be, is or are secured as a unit in a holding ring (17) which is detachably mounted on the head housing (3).

16. A device according to claim 15, characterized in that the pressure cover (20) or the unit (20, 21) as the case may be, in the holding ring (17), is screwed to the head housing (3).

**Revendications**

1. Dispositif de fixation monté dans un carter de tête (30) d'une pièce à main de dentisterie pour un outil rotatif (4), qui est logé dans un arbre cylindrique creux (32) et dont l'extrémité plate de la tige peut venir en prise, pour la transmission du couple de rotation, avec un organe d'entraînement (48) tournant conjointement avec l'arbre creux et est munie d'une gorge annulaire (10), et qui est maintenue dans une position de fermeture à l'aide de moyens d'encliquetage (41), qui sont formés par au moins un organe de fixation (43) s'étendant essentiellement parallèlement à l'axe en direction de l'extrémité du corps et tournant avec l'arbre (32) et muni d'un bec d'encliquetage (44) orienté transversalement par rapport à l'axe de l'outil et s'engageant dans la rainure annulaire (10) du corps, grâce à une force élastique ou grâce à l'élasticité propre des organes d'encliquetage (41), le bec d'encliquetage (44) venant en prise avec la gorge annulaire (10) lors de l'insertion de l'outil (4) dans l'arbre (32), et étant dégagé pour le dégagement axial de l'outil au moyen d'un organe de manoeuvre (33) chargé par une force de rappel et pouvant être actionné avec le pouce et d'un organe de dégagement (37), grâce au fait que la partie supérieure, portant le bec d'encliquetage (44) de l'organe de fixation (43) dans l'extrémité supérieure du carter de tête, tournée à l'opposée de la sortie de l'outil, dans un espace libre de l'arbre (32), caractérisé par le fait que l'arbre (32) contient un évidement intérieur (46, 47) possédant un diamètre étagé formant l'espace libre et destiné à recevoir les moyens d'encliquetage (41) et qui est conformé de telle sorte que dans sa section la plus large (47), le bec d'encliquetage (44) peut s'écarter vers l'extérieur, perpendiculairement à l'axe de l'outil, en vue de libérer la liaison par engrènement, que l'extrémité libre des moyens d'encliquetage (41) est disposée, sans aucun contact, en vis-à-vis de l'organe de dégagement (37), qui d'une part est monté sur l'organe de manoeuvre (33) ou est en liaison active avec ce dernier et d'autre part, ne prend pas appui dans le carter de tête (30) et ainsi ne tourne pas simultanément avec l'arbre, lorsque l'organe de manoeuvre (33) n'est pas actionné, et que l'extrémité libre des moyens d'ecliquetage est repoussée vers l'extérieur, lors de l'actionnement de l'organe de manoeuvre, par l'organe de dégagement à l'encontre de l'action de ressort ou de la direction d'engrènement, dans le sens d'une libération, et que l'organe de manoeuvre (33) prend appui dans le carter de tête (30) de telle sorte que, lorsqu'il est actionné, il peut exécuter un déplacement axial et/ou un mouvement de basculement.

2. Dispositif suivant la revendication 1, caractérisé par le fait que l'arbre (32) comporte un premier évidement (41) correspondant à l'épaisseur de la paroi de l'organe de fixation (41) et dans lequel l'extrémité (42) de l'organe de fixation (43), tournée à l'opposé de l'organe de dégagement (37), est insérée et que l'arbre contient un second évidement de taille supérieure (47) disposé au-dessus du premier et dans lequel l'organe d'entraînement (48) est disposé de telle manière qu'il bloque l'organe de fixation (43) contre toute sortie axiale et contre toute rotation.

3. Dispositif suivant la revendication 2, caractérisé par le fait que le second évidement supérieur (47) est situé au voisinage du palier supérieur (31a) sur l'extrémité de l'arbre (32) tournée à l'opposé de la sortie de l'outil et que les évidements (46, 47) sont des évidements formés autour et que l'organe d'entraînement (48) est réalisé sous la forme d'une douille montée fixe dans l'évidement supérieur (47).

4. Dispositif suivant la revendication 3, caractérisé par le fait que les moyens d'encliquetage (41) contiennent une pièce de base (42) en forme de douille pouvant être insérée dans le premier évidement formé autour (46) et sur laquelle sont disposées deux languettes élastiques (43, 43a) parallèles à l'axe et se raccordant à la pièce de base, et comportant des becs d'encliquetage (44, 44a) qui y sont fixés, de préférence en étant réalisés par façonnage.

5. Dispositif suivant l'une des revendications 1 à 4, caractérisé par le fait que les moyens d'encliquetage sont constitués par un anneau ouvert (52), inséré dans le premier évidement (46) de l'arbre (32), et comportant une partie élastique (50) s'étendant parallèlement à l'axe et comportant le bec d'encliquetage (51).

6. Dispositif suivant l'une des revendications 1 à 5, caractérisé par le fait que l'organe de manoeuvre (33) est appliqué contre une butée (35, 36) sur l'extrémité supérieure du carter de la tête (30), située à l'opposée de la partie (34) en forme de col de la pièce à main.

7. Dispositif suivant l'une des revendications 1 à 6, caractérisé par le fait qu'il est prévu comme organe de dégagement (37) une pièce élastique comportant une partie moulée (38) située en position centrée et destinée à être contactée par l'organe de manoeuvre (43).

8. Dispositif suivant la revendication 7, caractérisé par le fait que l'organe de dégagement (37) prend appui au moyen de plusieurs bras d'appui (39) réalisés et disposés en forme d'étoile, sur une surface plane (40) du carter de tête (30) et qu'un bras d'appui (39a) s'engage au-dessous un collet (37) de l'organe de manoeuvre (33) ou au-dessous d'un appendice saillant (36) du carter de tête (30) et forme ainsi la butée pour l'organe de manoeuvre (33) pouvant être actionné avec le pouce.

9. Dispositif suivant l'une des revendications 1 à 8, caractérisé par le fait que l'organe de manoeuvre (33) pouvant être actionné avec le pouce est réalisé sous la forme d'un couvercle à pression (14, 20) fixé rigidement par son bord (16) dans le carter de tête (3) et qui contient un élément de surface (6) présentant une élasticité de forme ou l'élasticité d'un ressort et qui, dans sa position initiale, est cintrée vers l'extérieur en forme de calotte et est déformée lors de l'application d'une pression sur le couvercle (14, 20), de telle sorte que cette forme cintrée convexe est transformée, en raison de la propriété d'élasticité du matériau utilisé, en une forme cintrée, concave avec création d'une force de rappel provoquant le retour automatique de la section (26) du couvercle de pression dans sa position initiale, le dispositif de fixation ou de serrage (7 à 9) étant amené depuis une position de verrouillage, maintenant l'outil (4) fixe, dans une position de déverrouillage libérant l'outil, grâce au déplacement, apparaissant par suite de la déformation, au-dessus de l'organe de dégagement (13, 22, 25).

10. Dispositif suivant la revendication 9, caractérisé par le fait que la conformation et le matériau du couvercle de pression (14, 20) sont choisis de telle sorte que le couvercle agit à la manière d'un couvercle à déclic de manière que la section (26) du couvercle à déclic passe brusquement dans la position cintrée concave lorsqu'une valeur de pression est atteinte et revient à nouveau brusquement de façon automatique dans la position cintrée convexe lors de la suppression de la pression.

11. Dispositif suivant la revendication 9 ou 10, caractérisé par le fait que la section (26) du couvercle à pression comporte, dans la région de son centre, un renfoncement (15) dont la surface (13) tournée vers l'outil (4) sert d'organe de pression.

12. Dispositif suivant l'une des revendications 9 à 11, caractérisé par le fait qu'au centre du couvercle à pression (20) est appliqué un organe d'accouplement (22) réalisé de préférence avec une forme conique et constituant l'organe de pression et qui est maintenu selon une liaison par formes complémentaires par une rondelle ondulée (21) fixée au couvercle à pression (20) dans le carter de tête (3).

13. Dispositif suivant l'une des revendications 9 à 12, caractérisé par le fait qu'au centre du couvercle à pression (20) est appliquée une rondelle ondulée (23) fixée avec ce couvercle dans le carter de tête (3) et que la rondelle ondulée (23) est conformée dans cette zone de telle manière que cette section (25) agit en tant qu'organe de pression pour les organes de fixation (8, 8a).

14. Dispositif suivant l'une des revendications 9 à 13, caractérisé par le fait que le couvercle à pression (20) possède une surface cintrée extérieure lisse, qu'un organe d'accouplement (22) réalisé de préférence avec une forme conique est prévu au centre du couvercle à pression et qu'il est prévu un autre insert en forme de couvercle (correspondant à la référence 14 sur la fig. 1), dont l'action correspond à celle du couvercle à pression et qui est équipé d'un renfoncement (correspondant à la référence 15 sur la fig. 1) adapté à un organe d'accouplement (22) et dont les surfaces (correspondant à la référence 13 sur la fig. 1) tournées vers ce dispositif de fixation et de serrage (7 à 9), agissent en tant qu'organes de pression.

15. Dispositif suivant l'une des revendications 9 à 14, caractérisé par le fait que le couvercle à pression (20) ou le couvercle à pression (20) et la rondelle ondulée (21) ou le couvercle à pression (20) et l'insert sont fixés sous la forme d'une unité de construction dans un anneau de fixation (17) maintenu, de façon à pouvoir être retiré, sur le carter de tête (3).

16. Dispositif suivant la revendication 15, caractérisé par le fait que le couvercle à pression (20) ou l'unité de construction (20, 21) est vissé dans l'anneau de fixation (17) au carter de tête (3).

FIG 1

FIG 2

FIG 3

FIG 4

26

20

16

16a

22

21

17

FIG 6

26

20

17

FIG 5

FIG 7

FIG 8

FIG 9

FIG 10

FIG 11

FIG 12